(19) **Europäisches Patentamt / European Patent Office / Office européen des brevets**

(11) **EP 4 775 533 A1**

(12) **EUROPEAN PATENT APPLICATION**
published in accordance with Art. 153(4) EPC

(43) Date of publication:
**15.07.2026 Bulletin 2026/29**

(21) Application number: **24862155.9**

(22) Date of filing: **04.09.2024**

(51) International Patent Classification (IPC):
$C01B\ 3/06^{(2026.01)}$  $C01B\ 3/50^{(2026.01)}$

(52) Cooperative Patent Classification (CPC):
Y02E 60/36

(86) International application number:
**PCT/ES2024/070535**

(87) International publication number:
**WO 2025/052016 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.09.2023 ES 202330737**

(71) Applicant: **Universidad Politécnica de Madrid
28040 Madrid (ES)**

(72) Inventors:
• **RIVERA DE MENA, Antonio Juan**
  28040 Madrid (ES)
• **PEÑA RODRÍGUEZ, Ovidio Yordanis**
  28040 Madrid (ES)
• **GAROZ GÓMEZ, David**
  28040 Madrid Madrid (ES)

(74) Representative: **Sahuquillo Huerta, Jesús
Jesana Patentes, SL
Jesana iP
C/ Huesca 5 ,Oficina 2
46001 Valencia (ES)**

(54) **METHOD FOR OBTAINING HYDROGEN BY MEANS OF WATER DISSOCIATION USING THERMOCHEMICAL REACTIONS UNDER (QUASI-)ISOTHERMAL CONDITIONS AND DEVICE FOR CARRYING OUT THE METHOD**

(57)　(EN) The present invention relates to a method for obtaining hydrogen through water molecule dissociation using thermochemical reactions under (quasi-)isothermal conditions, which comprises the following steps: placing active material (103) in the reaction chamber (109) of a reactor (101); reducing the active material (103) by supplying heat; evacuating the oxygen produced through a first outlet (106); injecting water into the reaction chamber (109); oxidizing the active material (103), thereby producing hydrogen; filtering the hydrogen produced through a selective filter (104) during the oxidization of the active material (103); and evacuating the filtered hydrogen through a second outlet (107), thereby obtaining a flow of high-purity hydrogen. The invention also relates to a device for carrying out the method.

Fig. 1

**Description**

TECHNICAL FIELD

The present invention relates to a method and device for obtaining hydrogen. Specifically, the invention relates to obtaining hydrogen through the dissociation of the water molecule by means of thermochemical reactions under isothermal (or quasi-isothermal) conditions.

BACKGROUND OF THE INVENTION

The use and exploitation of hydrogen produced from renewable energy sources (known as green hydrogen) is a priority objective in today's society in order to meet sustainability goals. Hydrogen is expected to be the most important energy vector in the near future, replacing natural gas and other fossil fuels, with applications in a wide range of areas: industry, transportation, and domestic activities (Turner, J. et al. Renewable hydrogen production. International Journal of Energy Research 32, 379-407, 2008).

There are several processes for producing green hydrogen. The use of electrolysers powered by electricity from renewable sources, solar or wind, is the most common process, due to the degree of maturity of the technologies involved. However, this production currently has two major drawbacks.

Firstly, electrolysers require energy in the form of electricity, and although this is a widely used form of energy, the production of electricity from renewable sources is limited and conditioned by market prices.

Furthermore, the final conversion efficiency from the primary source (typically photovoltaic solar energy) to hydrogen is very low due to losses incurred during the double transformation and distribution.

For practical purposes, the operational costs of producing hydrogen using electrolysers are very high, which affects the cost of hydrogen production. Thus, the final price of hydrogen per kWh is much higher than the current price of natural gas.

Among the alternative methods to electrolysers, thermochemical reduction-oxidation (redox) processes are noteworthy, as they allow the water molecule to be dissociated using thermal energy. In order to produce green hydrogen, thermal energy can be obtained directly from solar energy with higher efficiency than photovoltaics (A. Steinfeld, Solar thermochemical production of hydrogen - a review, Solar Energy, vol. 78, no. 5, pp. 603-615, May 2005, doi: 10.1016/j.solener.2003.12.012). Thermal energy from other industrial processes or high-efficiency transformations can also be used.

The thermochemical process for water splitting is usually based on the use of an active material (typically a metal oxide) capable of sustaining redox (reduction-oxidation) reactions.

The thermochemical process is usually implemented in two separate steps:

(i) first, the active material is heated, typically to a temperature between 900 °C and 1800 °C, giving rise to the reduction half-reaction, releasing oxygen in an endothermic reaction;

(ii) subsequently, the active material is brought into contact with water, resulting in the oxidation half-reaction, releasing hydrogen in an exothermic reaction.

$$MO_X + E_{thermal}^{reduction} \rightarrow MO_{X-\delta} + \frac{\delta}{2}O_2 \qquad \text{(R1)}$$

$$MO_{X-\delta} + \delta H_2O \rightarrow MO_X + \delta H_2 + E_{thermal}^{oxidation} \qquad \text{(R2)}$$

This two-step process has been extensively studied, and a large number of active materials are now known that can reach reduction temperatures using concentrated solar energy (Abanades, S., Charvin, P., Flamant, G., & Neveu, P. Screening of water-splitting thermochemical cycles potentially attractive for hydrogen production by concentrated solar energy. Energy 31, 2805-2822, 2006).

The solar thermal energy-based procedure for water dissociation through thermochemical reactions is postulated to be more efficient than the photovoltaic process combined with electrolysis or other procedures such as photolysis (Perkins, C. & Weimer, A. W. Solar-thermal production of renewable hydrogen. AIChE Journal 55, 286-293, 2009).

Noteworthy are the most relevant studies, which discuss that it is possible to achieve an efficiency of -20% using concentrated solar thermal energy (Chueh, W. C. et al. High-Flux Solar-Driven Thermochemical Dissociation of CO2 and H2O Using Nonstoichiometric Ceria. Science 330, 1797-1801 (2010) . Muhich, C. L. et al. Efficient Generation of H2 by Splitting Water with an Isothermal Redox Cycle. Science 341 , 540-542, 2013). This methodology has been put into practice experimentally with different configurations, most of them based on high-concentration solar thermal systems (> 200 suns), such as the central tower system with heliostats with powers of more than 2 MW (Muhich, C. L. et al. A review and perspective of efficient hydrogen generation via solar thermal water splitting. WIREs Energy and Environment 5, 261-287, 2016).

The active material is presented as a porous monolith or in the form of particles that, when receiving concentrated solar radiation, reach the reduction temperature and release oxygen in a stage lasting tens of minutes. The active material is then moved or hidden from the solar source, where it cools and oxidizes with water.

There are several patented inventions aimed at producing hydrogen from solar energy using thermochemical cycles.

Noteworthy are inventions WO2008113944A2 and CN112323092A, where the active material is converted to a gaseous state during reduction and then solidifies upon oxidation. Other inventions use particles of the active material, which circulate through different fluid beds to perform the reduction-oxidation cycles as they move through the reactor (US20120237440A1 ). Alternatively, the particles are stored in tanks where they are heated and reduced by solar energy, and water is then passed through the same tanks, where the reduction takes place and hydrogen is obtained (EP1 1003735A, US9399575B2). Porous monolith systems are based on solar reactors such as Goel's invention (WO2013021397), which are used in a central tower solar thermal system.

Current methods for producing renewable hydrogen from concentrated solar energy, using thermochemical reduction-oxidation (redox) cycles, are based on two approaches:

a) Cycle with a thermal jump so that the thermal reduction half-reaction (R1) occurs at a temperature considerably higher than the temperature of the oxidation half-reaction (R2) with water.

b) Isothermal (or quasi-isothermal) cycle, in which the reduction half-reaction and the oxidation half-reaction take place at the same (or similar) temperature.

Both approaches present efficiency problems that are difficult to solve, which have prevented the use of these reactions to produce green hydrogen on an industrial scale.

In the case of the first approach, the active material must be cooled to carry out the oxidation half-reaction at a lower temperature, in order to inhibit the reverse reduction reaction that occurs due to the interaction of the active material with the hydrogen produced. The subsequent reheating of the reactor involves considerable energy expenditure, which translates into low overall efficiencies that are difficult to avoid, even with complex engineering systems for heat recovery.

In the second case, the complete redox cycle takes place at a constant temperature, eliminating losses due to reactor reheating. In this case, another strategy must be sought to shift the equilibrium of the oxidation half-reaction of the active material with water towards hydrogen production, to the detriment of the recombination of the hydrogen generated by reduction of the active material. This hydrogen reduction process is very efficient at the high temperatures used in isothermal processes. Therefore, the strategy commonly used to shift the equilibrium is to disproportionately increase the amount of reactant (water).

According to numerous studies with different materials, in order to shift the equilibrium clearly towards hydrogen production, the molar ratio of reactant water to hydrogen produced must be between 100:1 and 1000:1.

This high water consumption entails enormous energy expenditure, necessary to vaporize such a large amount of water, which inevitably leads to an unacceptable drop in process efficiency that is difficult to compensate for through the use of heat recovery systems. Hao et al. 2013 (Hao, Y., Yang, C.-K., Haile, S.M., 2013.

High-temperature isothermal chemical cycling for solar-driven fuel production. Phys. Chem. Chem. Phys. 15, 17084-17092.) and Zhu et al 2016 (Zhu, L, Lu, Y., Shen, S., 2016. Solar fuel production at high temperatures using ceria as a dense membrane. Energy 104, 53-63.) show that efficiency does not exceed 10% for isothermal cycles below 1800 K. The authors indicate that it is necessary to recover 100% of the heat used in water vaporization to achieve efficiencies of 60%.

This fact has led experts to state that thermochemical reactions cannot be used under isothermal conditions in a practical way to produce hydrogen in future developments, since the resulting efficiency is considerably lower than that obtained with thermal jump (Al-Shankiti, I., Ehrhart, B.D., Weimer, A.W., 2017. Isothermal redox for H2O and CO2 splitting - A review and perspective. Solar Energy, Advances in Solar Thermochemistry 156, 21-29.).

The devices used in laboratories to carry out tests under isothermal conditions have even been disparagingly referred to as "steam engines" due to their high water consumption. This view of experts in the field means that, almost unanimously, projects for hydrogen production through thermochemical reactions propose cycles with a thermal jump. As described below, this invention goes against the grain of this body of doctrine, since the method described here, surprisingly, allows very high efficiencies to be achieved in (quasi-)isothermal cycles. sub-thermal cycles. To do this, in short, a hydrogen-selective filter is used that is capable of shifting the equilibrium of the oxidation half-reaction (R2) very sharply towards hydrogen production.

The patent (ES2932843) describes a methodology and device for improving the efficiency of thermochemical reactions using moderate solar concentration systems while reducing the degradation of the active material throughout the cycles.

The method and device described consist of several elements, such as the arrangement of a vacuum reactor, fed by solar collectors with a moderate concentration factor, a heat trap, and a process control system. The method and devices allow the optimization of the reduction and oxidation half-reaction times, achieving efficient hydrogen production due to the use of moderate temperatures, minimizing the amount of active material, and dispensing with the use of a carrier gas. The method allows operation under mild conditions, i.e., avoiding high molar fractions of reduction and, therefore, keeping the concentration of vacancies produced in the active material low, which prevents material degradation. However, this device has a major disadvantage in that it evacuates the gases from the oxidation reaction, hydrogen and water vapor, through the same outlet. This limits the efficiency or production of hydrogen, in addition to requiring a subsequent process to separate the two.

Among the studies with a thermal jump between the oxidation and reduction reactions, there are solutions that include membranes to separate hydrogen from other gases such a water and oxygen. Babiniec et al. 2017 (Babiniec, S.M., Ambrosini, A., Miller, J.E., 2017. Thermodynamic assessment of an electrically-enhanced thermochemical hydrogen production (EETHP) concept for renewable hydrogen generation. International Journal of Hydrogen Energy 42, 14380-14389.) propose using electrolytic membranes to separate hydrogen from the flow that carries the active material along with water vapor. For electrolytic separation, electricity is needed to allow hydrogen to pass through the membrane. This separation takes place when the active material has cooled and, therefore, has been previously oxidized. As the study indicates, the system's efficiency does not exceed 20%, even though part of the heat from the thermal jump is recovered. This concept of active material carried by a flow cannot be applied to the quasi-isothermal case, as the high oxidation temperature does not allow for efficient hydrogen production.

On the other hand, systems with active materials that change to the vapor phase when oxidized (FesO FeO) have been studied theoretically with direct conversion using chemical reactions, electrolytic processes, and thermochemical cycles, always with a thermal jump. Mallapragada and Agrawal 2013 (Mallapragada, D.S., Agrawal, R., 2014. Limiting and achievable efficiencies for solar thermal hydrogen production. International Journal of Hydrogen Energy 39, 62-75.) study a closed system, where the active material and products have no direct outlets. The system consists only of an inlet for water vapor. The authors propose ideal membranes to separate hydrogen and oxygen from the gases produced during the reactions of the active material in the closed system. These membranes only act by separating the gases that have been previously formed during the chemical, electrolytic, or reduction/oxidation reaction of the active material. The study concludes that ideal direct conversion processes can achieve efficiencies above 60%, such as electrolytic processes, while two-step cycles in thermal jump approximation are less efficient due to energy loss in latent heat.

As in the vast majority of studies, this study does not consider the isothermal approximation and is in fact incompatible with it, since outlets are necessary to evacuate the gases produced in the system that are not present in the closed system developed.

Therefore, it is necessary to improve the equipment and methods for obtaining high-purity hydrogen from thermochemical reactions under (quasi-) isothermal conditions. In this invention, we focus on achieving the two-step thermochemical reaction (reduction and oxidation) under (quasi-) isothermal conditions, despite the general belief that this is not an option. The reason, as described below, lies in the fact that, using the developed method, very high efficiencies can be achieved in the devices presented, since the problem of excessive water consumption is solved.

SUMMARY OF THE INVENTION

The present invention solves the problems related to obtaining hydrogen through thermochemical cycles under (quasi-) isothermal conditions. Despite the existing trend in the prior art, the present solution provides very high efficiency, using a device under (quasi-) isothermal conditions that avoids the high water consumption typical of previous solutions in the art.

In an isothermal development, the intrinsic efficiency per cycle, for a water/hydrogen molar ratio of 1:1, is greater than 85%, with the actual efficiency being a function of the other elements of the process and device, such as the heating system, thermal insulation systems, pumping systems, and other plant systems.

In a first aspect, the present invention relates to a process for dissociating water by means of thermochemical reduction-oxidation reactions under (quasi-) isothermal conditions with high efficiency.

The process consists of two-step cycles under (quasi-) isothermal conditions:

1. Reduction of active material (redox) placed in a reaction volume by supplying heat and evacuating the oxygen produced in the reduction through a first outlet.

2. Oxidation of the active material by injecting water into the reaction volume through an inlet provided for this purpose, keeping the first outlet closed and evacuating the hydrogen produced in the oxidation through a hydrogen selective filter via a second outlet. The hydrogen thus obtained is of high purity.

Specifically, the process according to the present invention comprises the following steps:

    a. placing the active material in a reaction volume of a reactor;

    b. reducing the active material placed therein by supplying heat;

    c. evacuating the oxygen produced through a first outlet;

    d. injecting water into the reaction volume;

    e. oxidizing the active material to produce hydrogen;

    f. filtering the hydrogen produced through a selective filter during the oxidation process of the active material; and

    g. evacuating the filtered hydrogen through a second outlet, configured to selectively evacuate the hydrogen produced during the oxidation of the active material in the reaction volume, obtaining high-purity hydrogen.

The evacuation of oxygen and hydrogen is carried out through a first and second outlet, which are two independent outlets of the reactor. Additionally, the flows from the inlet and the first and second outlets of each redox cycle are regulated and synchronized by a control system.

In this way, the solid active material, located in a reaction volume of limited size, into which gases are introduced or evacuated in a controlled manner through the inlets and outlets, can be reduced. The reduction is carried out by heating the active material and maintaining it at a (quasi-) isothermal operating temperature, either under vacuum conditions or in the presence of an inert gas. Once reduced, the active material is oxidized in the presence of water while maintaining the previous temperature. The water can be injected into the reaction volume once the first outlet is closed, coming into contact with the active material. The water can be injected in the form of steam, in liquid form (when operating under vacuum), or mixed with an inert gas.

The selective filter separates the hydrogen from the water vapor in the reaction volume. The result of selective evacuation is the effective shift of the reaction equilibrium towards hydrogen production, increasing the efficiency of the process.

In a second aspect of the invention, the solution refers to a device for obtaining hydrogen by dissociating water through thermochemical reactions under (quasi-)isothermal conditions.

This device comprises:

    a. a reactor with a reaction volume inside it configured to contain an active material and carry out the thermochemical cycles of water dissociation;

    b. an energy source configured to heat, in use, the active material disposed in the reaction volume of the reactor.

    c. an inlet, connected to a water injection system, configured to introduce water into the reaction volume of the reactor;

    d. a first outlet configured for the evacuation of oxygen;

    e. a selective hydrogen filter, connecting the reaction volume to a second outlet, configured to selectively evacuate, in use, the hydrogen produced in the reaction volume of the reactor.

Specifically, the first and second outlets of the device are two independent outlets of the reactor. Additionally, the device (100) comprises a process control system configured to regulate the stages of the redox cycle, synchronizing the opening and closing of the water injection system and the outlet for the gases produced.

In this way, the thermochemical cycles of water dissociation can be carried out inside the reactor. The energy source comprises a thermal system. The thermal system must be capable of capturing energy through thermal contact (e.g., to a resistive heater), through absorption of electromagnetic waves, through the use of a heat transfer fluid, or through the induction of eddy currents in the case of an induction system, and, in turn, must be capable of transmitting the thermal energy necessary to heat the active material and maintain the temperature during the reduction and oxidation cycles under (quasi-) isothermal conditions. The inlet is configured to introduce a controlled amount of water into the reaction volume of the reactor, and the independent outlets allow the gases generated in the reactor to be selectively evacuated.

The filter is mounted in such a way that hydrogen can easily reach it to be evacuated from the system. Thus, depending on the type of reactor, the filter may be located inside the reactor, attached to the reactor in an area close to the reactor, forming part of the reactor, or a combination of these options. The filter can be heated to a high temperature (2500 K) to facilitate its function, improving the selective filtering of hydrogen and, therefore, the efficiency of the process.

The use of a hydrogen-selective filter to rapidly evacuate the hydrogen produced as it is produced effectively shifts the half-reaction R2 towards hydrogen production by oxidation, to the detriment of the reverse reduction reaction in the presence of hydrogen, without the need to add a large excess of water, as required by current solutions.

In this way, the selective extraction of hydrogen through the selective filter not only allows effective operation without excess reactant water but also provides high-purity hydrogen and minimizes recombination with oxygen in the reactor. Furthermore, the configuration designed for the device of the present invention allows the high temperature of the reactor to be used to heat the filter to a temperature equal to or different from that of the reactor in order to maximize the selective extraction of hydrogen (preventing other gases from escaping) in appropriate materials such as, but not limited to, nickel and niobium.

The result of using a device such as the one described is a surprising increase in the efficiency of the device and the process in (quasi-) isothermal cycles. Therefore, the solution proposed in the present invention can replace or function in a complementary manner (as the case may be) to the combination of photovoltaic energy and electrolysers to generate hydrogen. In addition, it replaces all alternative forms of generating green hydrogen, such as photolysis processes, biological systems, etc.

In this sense, the invention can function in a complementary manner to photovoltaic energy, since hydrogen is an energy vector that allows energy to be stored for use on demand, something that is difficult to do with electrical energy. In this way, it allows the use of fuel cells to replace batteries in vehicles, especially in heavy vehicles and over long distances (highway).

The use of solar energy through hydrogen generation is particularly useful for road transport and industrial supplies where it can replace natural gas as a fuel, in addition to its use as a chemical reagent in numerous relevant processes (e.g., fertilizer manufacturing). Furthermore, an advantage of the invention is that it can be used for on-site hydrogen generation using a distributed generation paradigm, as opposed to the current centralized energy production paradigm. This is no minor issue, considering that the biggest problem in transitioning to a hydrogen-based economy has to do with the difficulty of transporting it cheaply and effectively, because it cannot be liquefied at room temperature.

Furthermore, different implementations of devices powered by energy sources other than solar energy can replace current electrolysers with numerous advantages, as they can use any energy source that can be converted into heat to produce renewable hydrogen.

The following references have been used in the figures:

100. Device

101. Reactor

102. Energy source

103. Active material

104. Selective filter

105. Inlet

106. First outlet

107. Second outlet

108. Container

109. Reaction volume

110. Insulator

111. Heater

112. Absorbent

BRIEF DESCRIPTION OF THE FIGURES

Figure 1 shows a schematic diagram of a device for obtaining hydrogen through thermochemical reactions equipped with a selective filter for hydrogen flow located inside the reactor.

Figure 2 shows a schematic diagram of an embodiment of a device for obtaining hydrogen by thermochemical reactions equipped with a hydrogen selective filter coupled to the reactor.

Figure 3 shows a schematic diagram of an embodiment of a device for obtaining hydrogen through thermochemical reactions equipped with a hydrogen-selective filter, where the filter is one of the walls of the reaction volume of the reactor.

Figure 4 shows a schematic diagram of an embodiment of a device with a tubular geometry comprising a tubular reactor defining a reaction volume and a selective filter , where the selective filter is arranged: a) inside the reaction volume coupled with the second outlet, b) outside the reaction volume, and c) as part of the reaction volume.

Figure 5 shows a schematic of an embodiment of a device comprising a reactor defining a reaction volume, a selective filter, and a thermal system formed by a heater and an insulator, wherein said selective filter is disposed: a) within the reaction volume coupled to the second outlet, b) outside the reaction volume at the second outlet, and c) as part of the reaction volume.

Figure 6 shows a schematic of an embodiment of a device comprising a cylindrical reactor, a selective filter, and a thermal system formed by an absorbent and an insulator, wherein the selective filter is arranged: a) inside the reaction volume coupled to the second outlet, b) outside the reaction volume at the second outlet, and c) as part of the reaction volume.

DETAILED DESCRIPTION OF THE INVENTION

The objective of the present invention is to provide a solution to the problems currently existing in the production of hydrogen, specifically in processes for obtaining hydrogen using thermochemical reactions under isothermal (or quasi-isothermal) conditions. The present invention, unlike the solutions known in the prior art, does not require the addition of excess reactant water in the half-reaction with water (R2) to shift it very sharply towards hydrogen production, but instead uses a selective filtration process to extract the hydrogen as it is produced.

In a first aspect of the invention, the solution refers to a process for obtaining hydrogen, achieving high efficiency, mainly due to the low water consumption in the process. In a preferred embodiment, the water/hydrogen molar ratio is less than 10:1, with a water/hydrogen molar ratio of less than 2:1 being more preferred, and a molar ratio of 1:1 being even more preferred, whose intrinsic efficiency for thermochemical cycles is greater than 85%.

The process, according to the present invention, obtains hydrogen by means of thermochemical cycles of water dissociation under (quasi-) isothermal conditions from an active material (103) capable of sustaining redox cycles, with hydrogen production in each oxidation half-cycle, where said material is partially reduced in the reduction half-cycle and oxidized in the oxidation half-cycle, reacting with water.

Thus, said process comprises the following steps:

a. placing the active material (103) in a reaction volume (109) of a reactor (101);

b. reducing the active material (103) placed therein by supplying heat;

c. evacuating the oxygen produced through a first outlet (106);

d. injecting water into the reaction volume (109);

e. oxidizing the active material (103) to produce hydrogen;

f. selectively filtering the hydrogen produced through a selective filter (104) during the oxidation process of the active material (103); and

g. evacuating the filtered hydrogen through the second outlet (107), obtaining high-purity hydrogen.

The oxidation and production of hydrogen according to this process is clearly favored by selectively evacuating the hydrogen from the reaction volume (109) as it is produced, to the detriment of the reverse reduction reaction.

In this way, a very effective shift of the equilibrium of the half-reaction R2 towards hydrogen production is achieved without the need to add excess water, as required by current solutions for (quasi-) isothermal cycles.

Furthermore, it is important to note that selective hydrogen filtration not only allows for a considerable increase in the production of this element without excess reactant water but also provides a high-purity product. To this end, in a preferred embodiment, selective hydrogen filtration is carried out at a temperature in the range of 600-2000 K.

For its part, the reduction of the active material (103) in stage b is preferably carried out at a high temperature depending on the active material (103) selected, with a temperature range of 1300 - 2500 K is recommended.

In a preferred embodiment, the process steps are automated, synchronizing the input and output of the compounds, thereby reducing water consumption.

To carry out this procedure, a second aspect of the invention describes a device (100) for obtaining hydrogen.

This device (100) comprises a reactor (101), where the thermochemical cycles of water dissociation are carried out under (quasi-) isothermal conditions in the presence of an active material (103). The reactor (101) comprises a reaction volume (109) configured to contain an active material (103) and carry out said thermochemical cycles. A preferred embodiment of the reactor (101) has, in use, a ratio between the free volume and the total volume, or reaction volume (109), of less than 1:10. This reduces water consumption in the process and maximizes the water pressure in the reactor (101), optimizing the reaction kinetics.

The active material (103) is a material capable of sustaining redox reactions without losing its properties over numerous successive cycles. It is located inside the reactor (101), in its reaction volume (109) . Typically, metal oxides are used, such as iron, with or without modifications to improve their properties through the inclusion of additives, nanostructuring, catalysts, etc. The use of any material with good properties is not ruled out, for example, other metal oxides such as FesC, ZnO, C03O4, Fe2O, SnO2, Mn2C>3, BÍ2O3, N$_i$0, CuO, BaO2, PbsC, or Ag2O, or more novel materials such as perovskites with promising properties.

The device (100) additionally comprises a gas inlet (105) and two gas outlets (106, 107).

The inlet (105) is connected to a water injection system. Its function is to introduce a controlled amount of water into the reaction volume (109) of the reactor (101) during the oxidation half-cycles of the active material (103) to obtain hydrogen.

The water can be introduced in the form of steam, using a vaporizer as the injection system, or in liquid form when operating under vacuum. **In** addition, an inert carrier gas can also be introduced. For this purpose, in a preferred embodiment, the inlet is connected to an inert gas injection system in addition to the water injection system.

Furthermore, unlike other previous solutions, the first and second outlets (106, 107) are two independent outlets from the reactor (101). These outlets may form part of an evacuation system. The evacuation system allows the reactor volume (109) to be evacuated, for example, by means of an external pumping system. Additionally, the evacuation system can be configured to inject a flow of inert gas to induce the reduction process of the active material.

The first gas outlet (106) is configured for the evacuation of gases, mainly oxygen generated during the reduction stage of an active material (103) disposed in the reaction volume (109). However, depending on the operating conditions, water vapor remaining from the oxidation half-cycle, mixed with a small amount of unfiltered hydrogen, may also be evacuated through this first outlet (106). Consequently, in an additional embodiment, said unfiltered hydrogen may be recovered from this residual stream.

However, the second gas outlet (107) is configured to selectively evacuate the hydrogen produced during the oxidation of the active material (103) in the reaction volume (109).

To this end, the device (100) comprises a selective hydrogen filter (104) that connects the reaction volume (109) to the second outlet (107) . **In** this way, the flow exiting through the second outlet (107) is a high-purity hydrogen flow.

The selective filter (104) can be made of any material with good thermomechanical behavior, good structural integrity, low chemical reactivity, and high hydrogen permeability, preventing the passage of other gases.

The reactor (101) preferably operates at a high temperature, so the heat existing in the reaction volume (109) can also be used to raise the temperature of the selective filter (104) and promote the permeability of the selective filter (104).

Thus, materials with selective permeability at high temperatures, such as nickel, are a preferred option, although there are also other alternatives such as palladium, niobium, titanium, vanadium, tantalum, iron, and alloys of these or other compounds, such as nickel-titanium-niobium-zirconium-tantalum-cobalt alloys (in proportions of 0 to 80%) or palladium-silver-copper alloys (in proportions of 0 to 80%), among others, which can also give good results. Alternatively, mixtures and alloys of materials for the formation of the selective filter (104) are also acceptable, as are multilayer systems.

The connection of said selective filter (104) to the reaction volume (109) must be made in such a way as to favor the passage of hydrogen. However, it may have different configurations, differing in the arrangement of said selective filter (104) or the amount of contact with the reactor (101), in order to control other aspects, such as the optimization of the operating temperature of the selective filter (104) used.

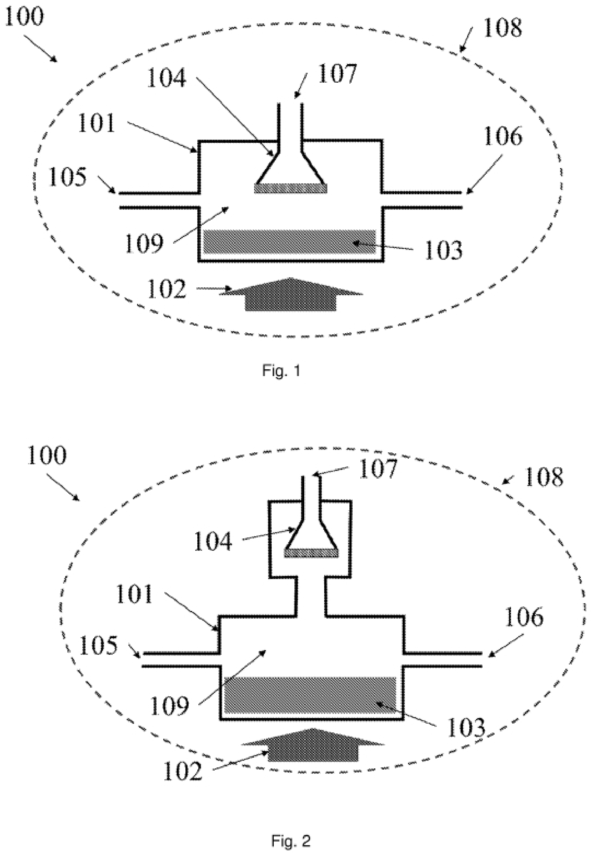

Examples of this type of implementation are shown in Figures 1-3.

Figure 1 shows a schematic diagram of a device (100) equipped with a hydrogen selective filter (104). **In** this embodiment, the selective filter (104) is located inside the reactor (101), in the reaction volume (109), so that the hydrogen generated can easily reach the selective filter (104). (104). In this embodiment, the selective filter (104) can reach the same temperature as the active material present in the reaction volume (109) of the reactor (101).

Alternatively, Figure 2 shows a schematic of a second embodiment of a device (100) with a selective filter (104) in the path of the hydrogen. In this case, the selective filter (104) is coupled to the reactor (101). As can be seen, there is a connection between the reaction volume (109) and the selective filter (104), which must be traversed by the hydrogen to reach the selective filter (104). Although this alternative initially presents less contact with the hydrogen, it has the advantage of allowing the temperature at which the selective filter (104) independently of the temperature of the active material (103), which allows the operation of the former to be optimized.

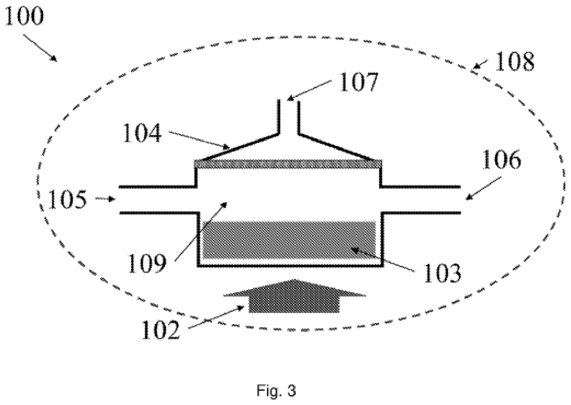

Additionally, Figure 3 shows a schematic of a third embodiment of a device (100) for obtaining hydrogen. In this schematic embodiment, the selective filter (104) corresponds to one of the walls that limit the reaction volume (109) of the reactor (101). That is, the selective filter (104) may correspond partially or completely to at least one of the walls of the reactor (101), maximizing contact with the reaction volume (109).

In a particular embodiment, the filter (104) may comprise a combination of the above embodiments, for example, in the case of using a large filter partially inserted into the reactor, which would result in a non-uniform temperature in the filter.

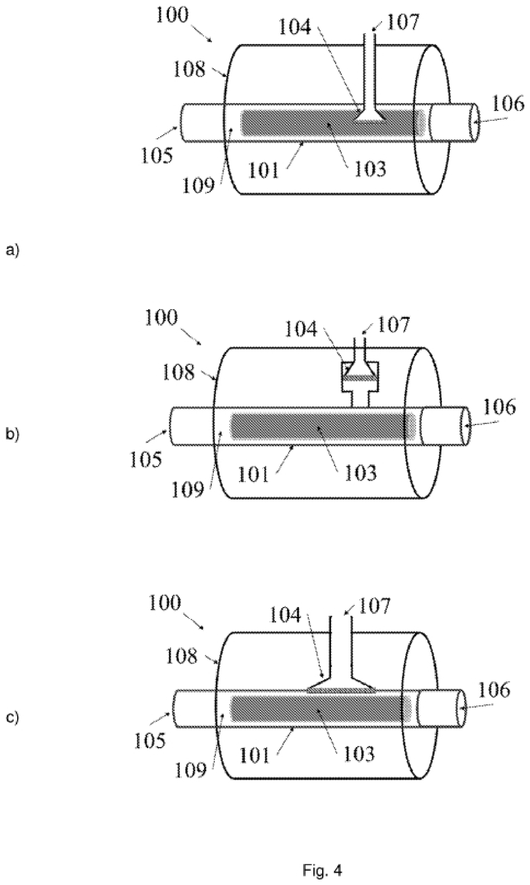

Figure 4 shows an embodiment of a reactor (101) with a tubular body, where the reaction volume (109) is linear, from an inlet (105) to a first outlet (106). The reaction volume (109) may contain active material (103) inside it, arranged along the entire length of the reaction volume (109).

In case a) of Figure 4, a selective filter (104) is shown located inside the reactor tube (101), occupying part of the reaction volume (109). The selective filter (104) is connected to the second outlet (107), through which the generated hydrogen can be evacuated. Thus, the filter (104) can take a tubular shape to fit the tubular reactor body (101). In case b) of Figure 4, a selective filter (104) coupled to the reaction volume (109) is shown. On this occasion, the selective filter (104) is arranged on a structure associated with the reaction volume (109) so that the hydrogen generated can reach the filter, pass through it, and be evacuated through the second outlet (107). As indicated above, this configuration is particularly relevant in those processes where the selective filter (104) has an optimum operating temperature different from that of the active material (103). In case c) of Figure 4, the selective filter (104) is the wall of the reactor (101) or part of it. In this way, the filter delimits the reaction volume (109) and is connected to the second outlet (107), through which the generated hydrogen can be evacuated.

Therefore, the selective filter (104) allows the selective permeation of hydrogen through some or all of the walls delimiting the reaction volume (109) of the reactor (101), increasing the speed of the hydrogen extraction process and preventing it from recombining through the reverse reaction to the oxidation of the active material (103) in the presence of water. In a preferred embodiment, regardless of the position of said selective filter (104), it operates at a temperature in the range of 600-2000 K.

The device (100) comprises an energy source (102). Said energy source (102) is configured to heat, in use, the reactor (101) which must transmit the heat to an active material (103) disposed in the reaction volume (109) to reach a temperature such that thermochemical cycles can be induced in the active material (103) can be induced. Depending on the end application, the device may have a power source (102) with a different configuration. Thus, the power source (102) comprises a thermal system that may consist of one or more elements as described below.

In a particular embodiment, the thermal system consists of a heater (111) and an insulator (110), partially or completely surrounding the reactor (101). The heater (111) may be an electric heater, which typically has a tungsten, tantalum, silicon carbide, or molybdenum disilicide resistance, without excluding others, embedded in ceramic material.

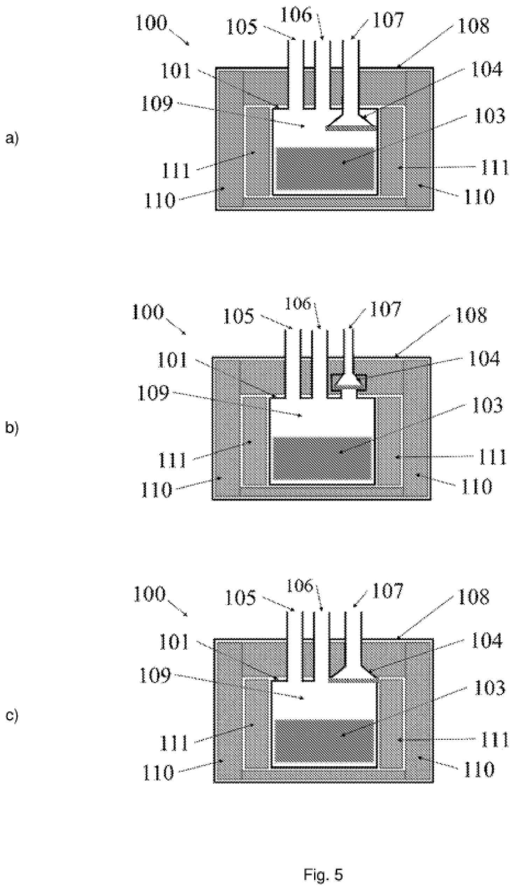

The insulator (110) is an alumina wool-type insulator (typically composed of aluminum, silicon, and/or zirconium oxides with a variable composition depending on the operating temperature). As can be seen in Figure 5, which shows a schematic of a device comprising a reactor (101), , a selective filter (104), and a thermal system. The filter (104) may be located inside the reactor (101) (case a), coupled to the reactor (101) in a nearby location (case b), or the filter (104) may form the reactor or part of the reactor (case c). Furthermore, the reactor (101) may be made of alumina or other refractory ceramic.

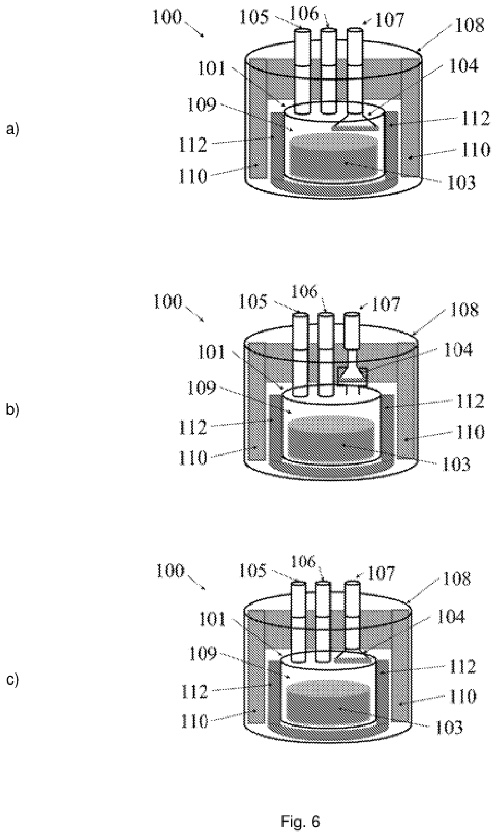

Alternatively, in another particular embodiment, the thermal system comprises an energy absorber (112) and an insulator (11) partially or completely surrounding the reactor (101). Figure 6 shows a schematic of an embodiment of a device with cylindrical geometry composed of the container (108), the reactor (101) with its gas inlets (105) and outlets (106, 107) defining the reaction volume (109), and a selective filter (104). The selective filter (104) is arranged: a) inside the reaction volume (109) coupled with the second outlet (107), b) outside the reaction volume (109) in the second outlet (107), and c) as part of the reaction volume (109). The absorbent (112) is located in the vicinity of the walls that form the reaction volume (109) and may be in contact with the reactor (101) in order to increase its temperature by capturing energy, transmitting the captured energy by conduction to the reactor (101). The absorber (112) may be a specific material or a combination of vapors, in order to maximize energy absorption.

Thus, in the case of using electromagnetic radiation, the absorber (112) has a high absorption coefficient in the electromagnetic band of the source used. **In** the case of using electrical energy through a resistor, the absorber has high thermal conductivity to transmit heat from the resistor to the reactor. When using a hot fluid, the absorbent medium (112) has a high convection coefficient for the fluid in question. When using a magnetic induction system, the absorber (112) must be capable of generating induced eddy currents inside it in order to heat up to operating temperatures.

Regardless of the mode used, the transmission of thermal energy captured by the absorber (112) to the reactor (101) must be optimal in order to heat the active material (103) and maintain the temperature during the reduction and oxidation cycles under (quasi-)isothermal conditions.

The consequence of the configuration of the device (100) according to the present invention is a very marked shift of the equilibrium towards hydrogen production in the oxidation half-reaction with water, without the need to add excess reactant water, which substantially improves the final efficiency of the process.

In one embodiment, the device comprises a container (108). In one particular embodiment, the container (108) is a hermetic container. Additionally, in a particular embodiment, the container (108) may be designed to effectively reflect electromagnetic radiation. Thus, in another preferred embodiment, conduction and convection losses are reduced by using a hermetic container (108) with low thermal conductivity, configured to contain at least the reaction volume (109) inside it, reducing heat losses. Furthermore, losses are reduced when the hermetic container (108) and the reactor (101) operate under vacuum, so preferably the hermetic container (108) is a vacuum container, to prevent heat losses due to conduction and convection.

The container (108) does not need to be hermetic if the outlet (107) has direct access to the reactor through the filter (104). However, it does need to be hermetic and operate under vacuum if the filtered hydrogen exits directly into the container from where it must be evacuated. In a particular embodiment, the presence of the insulator (110) and, where applicable, the combination with a container (108) designed as an electromagnetic radiation reflector ensure that the surface of the container (108) is very close to ambient temperature even under conditions of operation of the reactor (101) at very high temperatures.

Therefore, the geometry of the reactor (101) can vary to suit the thermal system, as well as the dimensions of the container (108).

Additionally, the device (100) comprises a process control system configured to regulate the stages of the redox cycle. Specifically, said control system comprises a set of valves and pumps to regulate the flows at the inlet (105) and outlets (106, 107), so that the correct amount of water (or other fluids) required in the oxidation half-cycles is admitted and the gases produced, hydrogen and oxygen, are evacuated during the procedure.

In this way, the opening and closing of the injection system at the inlet (105) and the evacuation of the gases produced through the two outlets (106, 107) are synchronized.

Thanks to the present invention, the equilibrium of the water dissociation reaction is shifted towards hydrogen production, favoring the reoxidation of the active material (103) to the detriment of the reverse reaction, where the hydrogen produced reduces the active material (103) again.

An example of the implementation of the procedure may be one that uses ceria, acting as the active material (103), in powder form at a temperature <2000 K. Additionally, a selective filter (104) of nickel, niobium (or alloys of these elements) with a small thickness, between 50 pm and 2 mm, can be used. This selective filter (104) can be found at a temperature equal to or different from that of the active material (103). Thus, the selective filter (104) is preferably at a temperature between 1000 and 2000 K. In conclusion, the set of solutions described according to the present invention solves the limitations existing in the prior art related to the low efficiency of processes and devices for obtaining hydrogen by means of thermochemical cycles under (quasi-) isothermal conditions. The devices described herein can replace or function in a complementary manner to the combination of photovoltaic energy and electrolysers to generate hydrogen. In addition, they replace all alternative forms of generating green hydrogen (photolysis, biological systems, etc.).

In this sense, the hydrogen produced can act as an energy vector that allows energy to be stored for use on demand. This capacity of the hydrogen produced, characterized by a high-purity process, allows its use in fuel cells, replacing batteries in vehicles, especially for heavy vehicles and long distances. Additionally, the ability to harness any form of energy convertible to heat through the energy source (102) used allows the procedure and device (100) according to the present invention to be used to recover residual energy from other industrial processes, which translates into a substantial improvement over the limitations of other known solutions.

**Claims**

1.  A method for obtaining hydrogen by means of thermochemical water dissociation cycles under (quasi-) isothermal conditions from an active material capable of sustaining redox cycles, with hydrogen production in each oxidation half-cycle, where said active material is partially reduced in the reduction half-cycle and reoxidized in the oxidation half-cycle induced by interaction with water, **characterized in that** said process comprises the following steps:

    placing the active material (103) in a reaction volume (109) of a reactor (101);
    reducing the active material (103) arranged, by supplying heat;
    evacuating the oxygen produced through a first outlet (106);
    injecting water into the reaction volume (109);
    oxidizing the active material (103) to produce hydrogen;
    filtering the hydrogen produced through a selective filter (104) during the oxidation process of the active material (103); and
    evacuating the filtered hydrogen through a second outlet (107), configured to selectively evacuate the hydrogen produced during the oxidation of the active material (103) in the reaction volume (109), obtaining high-purity hydrogen;
    wherein the first and second outlets (106, 107) are two independent outlets of the reactor (101), and
    wherein the flows of the inlet (105) and the first and second outlets (106, 107) of each redox cycle are regulated and synchronized by a control system.

2.  The method for obtaining hydrogen according to claim 1, wherein the selective filtering of hydrogen is carried out at a temperature in the range 600-2000 K.

3.  The method for obtaining hydrogen according to claims 1 to 2, wherein the reduction of the active material (103) is carried out at a temperature in the range 1300-2000 K.

4.  The method for obtaining hydrogen according to any of claims 1 to 3, wherein the water/hydrogen molar ratio is less than 10:1.

5.  A device for obtaining hydrogen by means of thermochemical cycles of water dissociation under (quasi-) isothermal conditions, from an active material capable of sustaining redox cycles, with hydrogen production in each oxidation half-cycle, wherein said active material is partially reduced in the reduction half-cycle and reoxidized in the oxidation half-cycle induced by interaction with water, **characterized in that** said device (100) comprises:

    a reactor (101) with a reaction volume (109) inside configured to contain an active material (103) and carry out thermochemical water dissociation cycles;
    an energy source (102) configured to heat, in use, an active material (103) disposed in the reaction volume (109) of the reactor (101);
    an inlet (105), connected to a water injection system, configured to introduce a controlled amount of water into the reaction volume (109) of the reactor (101);
    a first outlet (106) configured for the evacuation of gases; and
    a selective hydrogen filter (104), connecting the reaction volume (109) to a second outlet (107), configured to evacuate, in use, hydrogen produced in the reaction volume (109) of the reactor (101)
    wherein the first and second outlets (106, 107) are two independent outlets of the reactor (101), and
    wherein the device (100) comprises a process control system comprising a set of valves and pumps configured to regulate the stages of the redox cycle, synchronizing the opening and closing of the water injection system and the outlet of the gases produced.

6.  The device for obtaining hydrogen according to claim 5, wherein the device (100) comprises a process control system comprising a set of valves and pumps configured to regulate the stages of the redox cycle, synchronizing the opening and closing of the water injection system and the outlet for the gases produced.

7.  The device for obtaining hydrogen according to claim 6, wherein the process control system comprises an automatic means for controlling the set of valves and pumps.

8.  The device for obtaining hydrogen according to claim 5, wherein the selective filter (104) comprises an operating temperature in the range of 600-2000 K.

9. The device for obtaining hydrogen according to any of claims 5 to 6, wherein the selective filter (104) is located inside the reactor (101), corresponds partially or completely with at least one of the walls of the reaction volume (109) of the reactor (101), or is coupled to the reactor (101).

10. The device for obtaining hydrogen according to any of claims 5 to 7, wherein the selective filter (104) is a filter made of nickel, niobium, or an alloy of these compounds.

11. The device for obtaining hydrogen according to claim 8, wherein the selective filter (104) has a thickness between 50 pm and 2 mm, with an operating temperature between 1000 and 2000 K.

12. The device for obtaining hydrogen according to any of claims 5 to 9, wherein the water injection system is a vaporizer (110).

13. The device for obtaining hydrogen according to any of claims 5 to 10, wherein the ratio, in use, of the free volume to the reaction volume (109) is less than 1:10.

14. The device for obtaining hydrogen according to any of claims 5 to 11, wherein the device comprises an electric heater (111).

15. The device for obtaining hydrogen according to any of claims 5 to 11, wherein the device comprises an absorbent (112).

16. The device for obtaining hydrogen according to any of claims 5 to 13, wherein the device comprises an insulator (110).

17. The device for obtaining hydrogen according to any of claims 5 to 14, wherein the device comprises a container (108).

Fig. 1

Fig. 2

Fig. 3

Fig. 4

Fig. 5

Fig. 6

# EP 4 775 533 A1

<table>
<tr><td colspan="2" align="center"><strong>INTERNATIONAL SEARCH REPORT</strong></td><td>International application No.<br>PCT/ES2024/070535</td></tr>
</table>

### A. CLASSIFICATION OF SUBJECT MATTER

***C01B3/06*** (2006.01)
***C01B3/50*** (2006.01)
According to International Patent Classification (IPC) or to both national classification and IPC

### B. FIELDS SEARCHED

Minimum documentation searched (classification system followed by classification symbols)
C01B

Documentation searched other than minimum documentation to the extent that such documents are included in the fields searched

Electronic data base consulted during the international search (name of data base and, where practicable, search terms used)

INVENES, EPODOC, WPI, TXPUS, TXPWO, TXPCN, TXPSPJ, NPL, INSPEC, COMPENDEX, GOOGLE, GOOGLE PATENTS, GOOGLE SCHOLAR.

### C. DOCUMENTS CONSIDERED TO BE RELEVANT

| Category* | Citation of document, with indication, where appropriate, of the relevant passages | Relevant to claim No. |
|---|---|---|
| Y | ES 2932843 A1 (UNIV MADRID POLITECNICA) 26/01/2023, page 6, line 16 – page 13, line 32, claims 1-14, figure 5. | 1-17 |
| Y | MALLAPRAGADA DHARIK S et al. Limiting and achievable efficiencies for solar thermal hydrogen production. International Journal Of Hydrogen Energy, Elsevier, 16/11/2013, Vol. 39, N° 1, pages 62-75, ISSN 0360-3199, <DOI: 10.1016/j.ijhydene.2013.10.075> 3.6.1. Fe3O4/FeO cycle. | 1-17 |
| Y | BABINIEC SEAN M. et al. Thermodynamic assessment of an electrically-enhanced thermochemical hydrogen production (EETHP) concept for renewable hydrogen generation. International Journal Of Hydrogen Energy, 13/05/2017, Vol. 42, N° 21, pages 14380-14389, ISSN 0360-3199, <DOI: 10.1016/j.ijhydene.2017.04.125> Introduction, figure 1. | 1-17 |

☒ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | "&" | document member of the same patent family |

| Date of the actual completion of the international search<br>22/01/2025 | Date of mailing of the international search report<br>**(23/01/2025)** |
|---|---|
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>M. González Rodríguez<br><br><br>Telephone No. 913493290 |

Form PCT/ISA/210 (second sheet) (July 2022)

# INTERNATIONAL SEARCH REPORT

International application No.

PCT/ES2024/070535

C (continuation). DOCUMENTS CONSIDERED TO BE RELEVANT

| Category * | Citation of documents, with indication, where appropriate, of the relevant passages | Relevant to claim No. |
|---|---|---|
| Y | CHENXI SUI et al. Solar Thermochemical Water-Splitting Reaction Enhanced by Hydrogen Permeation Membrane. Arxiv.org, 2018-08-07, Cornell University Library, 07/08/2018, Introduction. | 1-17 |
| A | ES 2382267T T3 (COMMISSARIAT ENERGIE ATOMIQUE) 06/06/2012, page 4, line 64 – page 5, line 7; page 6, lines 3-64. | 1-17 |
| A | LI S et al. Thermodynamic Analyses of Fuel Production Via Solar-Driven Ceria-Based Nonstoichiometric Redox Cycling: A Case Study of the Isothermal Membrane Reactor System. Journal Of Solar Energy Engineering, 01/04/2019, Vol. 141, N° 2, <DOI: 10.1115/1.4042228> 1.Introduction, 2. Methodology. | 1-17 |
| A | DUBE S et al. Synthesis and application of Ni-based membranes in hydrogen separation and purification systems: A review. Journal Of Environmental Chemical Engineering, 01/02/2023, Vol. 11, N° 1, ISSN 2213-3437 (electronic), <DOI: 10.1016/j.jece.2022.109194> 2. 2.Types of nickel membranes. | 1-17 |
| A | SAFARI FARID et al. A review and comparative evaluation of thermochemical water splitting cycles for hydrogen production. Energy Conversion And Management, 30/12/2019, Vol. 205, ISSN 0196-8904, <DOI: 10.1016/j.enconman.2019.112182> 3. Thermochemical cycles for water splitting. | 1-17 |
| A | LAN XIAO et al. Advances in solar hydrogen production via two-step water-splitting thermochemical cycles based on metal redox reactions. Renewable Energy, 18/11/2011, Vol. 41, pages 1-12, ISSN 0960-1481, <DOI: 10.1016/j.renene.2011.11.023> 1. Introduction. 2. Advances in redox working materials and reactor designs. | 1-17 |

Form PCT/ISA/210 (continuation of second sheet) (July 2022)

## INTERNATIONAL SEARCH REPORT

Information on patent family members

International application No.

PCT/ES2024/070535

| Patent document cited in the search report | Publication date | Patent family member(s) | Publication date |
|---|---|---|---|
| ES2932843 A1 | 26.01.2023 | WO2024023379 A1 | 01.02.2024 |
| ES2382267T T3 | 06.06.2012 | ATE555060T T1 | 15.05.2012 |
| | | CN102036910 A | 27.04.2011 |
| | | CN102036910B B | 18.12.2013 |
| | | EP2288574 A1 | 02.03.2011 |
| | | EP2288574 B1 | 25.04.2012 |
| | | FR2931471 A1 | 27.11.2009 |
| | | FR2931471 B1 | 14.01.2011 |
| | | WO2009141549 A1 | 26.11.2009 |
| | | PL2288574T T3 | 31.10.2012 |
| | | US2011076575 A1 | 31.03.2011 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008113944 A2
- CN 112323092 A
- US 20120237440 A1
- EP 11003735 A
- US 9399575 B2
- WO 2013021397 A
- ES 2932843

**Non-patent literature cited in the description**

- **TURNER, J. et al.** Renewable hydrogen production. *International Journal of Energy Research*, 2008, vol. 32, 379-407
- **A. STEINFELD**. Solar thermochemical production of hydrogen - a review. *Solar Energy*, May 2005, vol. 78 (5), 603-615
- **ABANADES, S.** ; **CHARVIN, P.** ; **FLAMANT, G** ; **NEVEU, P.** Screening of water-splitting thermochemical cycles potentially attractive for hydrogen production by concentrated solar energy.. *Energy*, 2006, vol. 31, 2805-2822
- **PERKINS, C.** ; **WEIMER, A. W**. Solar-thermal production of renewable hydrogen. *AIChE Journal*, 2009, vol. 55, 286-293
- **CHUEH, W. C. et al.** High-Flux Solar-Driven Thermochemical Dissociation of CO2 and H2O Using Nonstoichiometric Ceria. *Science*, 2010, vol. 330, 1797-1801
- **MUHICH, C. L. et al.** Efficient Generation of H2 by Splitting Water with an Isothermal Redox Cycle. *Science*, 2013, vol. 341, 540-542
- **MUHICH, C. L. et al.** A review and perspective of efficient hydrogen generation via solar thermal water splitting.. *WIREs Energy and Environment*, 2016, vol. 5, 261-287
- **HAO, Y., YANG, C.-K., HAILE, S.M.** High-temperature isothermal chemical cycling for solar-driven fuel production. *Phys. Chem. Chem. Phys.*, 2013, vol. 15, 17084-17092
- **ZHU, L** ; **LU, Y.** ; **SHEN, S.** Solar fuel production at high temperatures using ceria as a dense membrane. *Energy*, 2016, vol. 104, 53-63
- **AL-SHANKITI, I.** ; **EHRHART, B.D.** ; **WEIMER, A.W**. Isothermal redox for H2O and CO2 splitting - A review and perspective.. *Solar Energy, Advances in Solar Thermochemistry*, 2017, vol. 156, 21-29
- **BABINIEC, S.M** ; **AMBROSINI, A** ; **MILLER, J.E.** Thermodynamic assessment of an electrically-enhanced thermochemical hydrogen production (EETHP) concept for renewable hydrogen generation.. *International Journal of Hydrogen Energy*, 2017, vol. 42, 14380-14389
- **MALLAPRAGADA, D.S** ; **AGRAWAL, R.** Limiting and achievable efficiencies for solar thermal hydrogen production. *International Journal of Hydrogen Energy*, 2014, vol. 39, 62-75